# EUROPÄISCHE PATENTSCHRIFT

(11) **EP 0 825 049 B1**
(45) Veröffentlichungstag und Bekanntmachung des Hinweises auf die Patenterteilung: **15.05.2002**
(21) Anmeldenummer: 97113555.3
(22) Anmeldetag: 06.08.1997
(51) Int. Cl.: B60J 7/10

(54) **Verriegelungsvorrichtung für eine Plane**
Locking device for tarpaulins
Système de verrouillage pour bâche

(30) Priorität: 21.08.1996 DE 29614478 U
(43) Veröffentlichungstag der Anmeldung: 25.02.1998
(73) Patentinhaber: MBFL Fliegl GmbH, 07819 Triptis (DE)
(72) Erfinder: Fliegl, Helmut, 84556 Kastl (DE)
(74) Vertreter: Schieschke, Klaus, Dipl.-Ing.

(56) Entgegenhaltungen:
- CH-A- 605 237
- DE-U- 9 206 151
- FR-A- 2 352 689
- FR-A- 2 667 552

## Beschreibung

Die Erfindung bezieht sich auf eine Verriegelungsvorrichtung für eine Plane, insbesondere zum Verschließen und Verspannen einer seitlichen Schiebegardine an einem Fahrzeug, insbesondere Speditionsanhänger, mit an der Plane befestigten Spanngurten, diesen zugeordneten Spannhaken und mindestens einer Spannvorrichtung zwischen den Spanngurten und den Spannhaken, nach dem Oberbegriff des Ansprüchs 1.

Als allgemeiner Stand der Technik ist es bereits bekannt, Planen, beispielsweise Schiebegardinen, an einem Speditionsanhänger, wie Sattelauflieger, Speditionsanhänger mit Drehschemel, Tandemanhänger usw., so an dem Rahmen des Fahrzeugs zu befestigen, daß die einzelnen Spanngurte in Spannhaken eingehängt und anschließend jeweils durch eine Spannvorrichtung verriegelt werden. Es ergibt sich damit ein hoher konstruktiver Aufwand, da an jeder Spannstelle eine Spannvorrichtung vorhanden sein muß und jede dieser Spannvorrichtungen einzeln zu betätigen sind, wenn die jeweilige Plane festgespannt werden soll. Damit ist sowohl das Ver- als auch das Entriegeln zeit- und kostenaufwendig.

Darüber hinaus zählt eine Verriegelungsvorrichtung zum Stand der Technik, bei welcher die Spannhaken an einer gemeinsamen Welle angeordnet sind, die im Rahmen des Fahrzeugs gelagert und mit einer einzigen Spannvorrichtung verbunden sind (DE-U-92 06 151.6). Auf der Spannwelle befinden sich Mitnehmer mit Haken, in welche Spannhaken der Plane eingreifen.

Weiterhin ist eine Konstruktion bekannt, bei welcher ein Spannhebel vorliegt, der mit einem weiteren Spannhebel zusammen wirkt (FR-A-2 6 7 552). Dieser zweite Spannhebel ist stimseitig mit einer U-förmigen Ausnehmung versehen, in welche ein Rohr eingesetzt werden muss, das vorderseitig das Abschlußende einer Plane bildet. Diese Konstruktion erfordert handwerkliches Geschick, um das Rohr funktionssicher in der U-förmigen Ausnehmung zu haltern und von der Offenstellung in die Schließstellung zu überführen.

Demgegenüber liegt der vorliegenden Erfindung die Aufgabe zugrunde, eine Verriegelungsvorrichtung der eingangs genannten Art zu schaffen, welche bei einfachem Aufbau eine schnellere Handhabung ermöglicht und gewährleistet, daß die Plane, beispielsweise eine seitliche Schiebegardine an einem Speditionsanhänger, schnell und funktionssicher festgezurrt werden soll.

Diese Aufgabe wird erfindungsgemäß mit den Merkmalen im kennzeichnenden Teil des Ansprüchs 1 gelöst. Es ergibt sich damit eine Planenzentralverriegelung, welche schnell und funktionssicher das Verriegeln bzw. das Entriegeln, insbesondere einer seitlichen Schiebegardine an einem Speditionsanhänger, ermöglicht, woraus insgesamt eine erhebliche Zeitersparnis resultiert.

Diese erfindungsgemäße Planenzentralverriegelung weist eine seitlich im Fahrzeug gelagerte, in Längsrichtung durchgehende Welle auf, welche in einem Winkelprofil drehbar gelagert ist. Auf dieser Welle sind im genügenden Abstand voneinander (beispielsweise 400 bis 600 mm) Spannhaken, in welchen die seitlichen Spanngurte eingehängt werden.

Das Öffnen und Schließen erfolgt also erfindungsgemäß über eine Spannvorrichtung, welche als Doppelschwinge ausgebildet ist. Die eine Schwinge ist an der Welle befestigt, wobei eine zweite, mit einem Betätigungshebel versehene Schwinge in einer Lagerstelle unterhalb des Rahmens gelagert ist. Beide Schwingen sind durch eine Koppel miteinander verbunden. In Schließstellung der Spannvorrichtung nimmt die Doppelschwinge eine Übertotpunktlage ein. Der Betätigungshebel ist vorzugsweise abschließbar bzw. zollsicher in Schließstellung zu halten. Die Spannvorrichtung kann vorteilhafterweise an der Innenseite des Außenprofils (Bodenprofil) eingebaut sein. Diese Bauweise ermöglicht vorteilhafterweise die Einfederung eines Fahrzeugreifens bis an die Unterkante eines Plattenbodens. Durch die geschützte Lage ist die Verriegelung vor äußeren Einwirkungen und Beschädigungen geschützt.

Durch die erfindungsgemäße Planenzentralverriegelung ergeben sich folgende Vorteile:
- Schnelles Öffnen und Schließen der Spanngurte,
- kein Verschleiß oder Auswechseln von Planenspannern (geringe Wartung und Pflege),
- seitlich durchgehende glatte Plane, d.h. Vermeidung von Flattern der Gurte im Fahrtwind,
- Gewährleistung einer größeren Werbefläche einer durchgehend glatten, festgezurrten Plane,
- geringe Beschädigungsgefahr, weil die Spanngurte außen glatt anliegen.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
- Fig. 1: eine schematische Schnittansicht durch einen Plattenboden eines Fahrzeuges mit geöffneter Spannvorrichtung und geöffneten Spannhaken;
- Fig. 2: eine vergrößerte Ansicht der Spannvorrichtung analog Fig. 1;
- Fig. 3: eine vergrößerte Ansicht eines Spannhakens in Offenstellung;
- Fig. 4: eine Darstellung analog nach Fig. 1 mit geschlossener Spannvorrichtung;
- Fig. 5: eine vergrößerte Darstellung der geschlossenen Spannvorrichtung nach Fig. 4;
- Fig.6: eine vergrößerte Darstellung einer festgezurrten Plane mit geschlossenen Spannhaken.

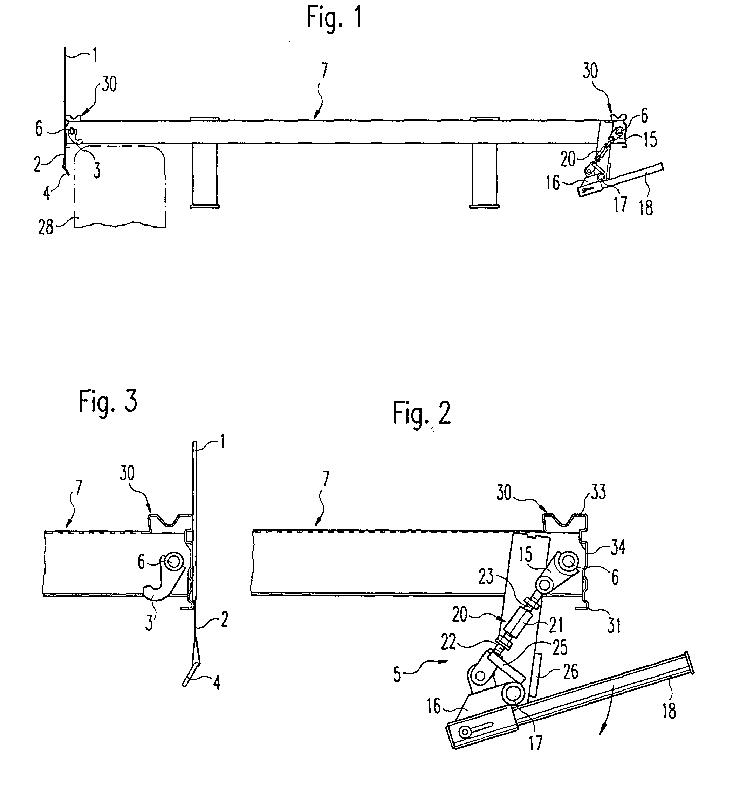

Gemäß den Fig. 1 bis 3 liegt eine Plane 1 vor, welche mit Spanngurten 2 und Ösen 4 versehen ist. Diese Plane 1 ist beispielsweise eine seitliche Schiebegardine an einem Fahrzeug, insbesondere einem Speditionsanhänger.

Das Fahrzeug weist einen Rahmen 7 auf, der mit einem Außenprofil 30 versehen ist. Im Profilraum des Außenprofils 30 befindet sich eine längsverlaufende Welle 6, an welcher Spannhaken 3 in bestimmten Abständen angeordnet sind. Die Welle 6 ist drehbar, und zwar mit Hilfe einer einzigen Spannvorrichtung 5.

Fig. 3 zeigt die mit der drehbaren Welle 6 verbundenen Spannhaken 3 in Offenstellung. Fig. 2 zeigt, wie in dieser Lage die Spannvorrichtung 5 positioniert ist. Diese Spannvorrichtung 5 ist als Doppelschwinge ausgebildet, wobei eine erste Schwinge 15 an der Welle 6 befestigt ist. Eine zweite Schwinge 16, die mit einem Betätigungshebel 18 versehen ist, lagert in einer Lagerstelle 17 unterhalb des Rahmens 7. Die beiden Schwingen 15 und 16 sind durch eine Koppel 20 miteinander verbunden.

Die Koppel 20 ist längenveränderbar ausgebildet; sie weist bei dem Ausführungsbeispiel eine Gewindehülse 21 mit zwei gegenläufigen Gewindebolzen 22 und 23 auf. Hierdurch ist es möglich, die Spannvorrichtung in funktionsgerechter Lage einzustellen.

Der Betätigungshebel 18 ist mit einer Schließplatte 25 versehen, welche in Schließstellung im Bereich einer anderen, an der Lagerstellung 17 angeordneten Schließplatte 26 liegt. Beide Schließplatten 25 und 26 können durch ein Schließelement miteinander verriegelbar sein, so daß in Schließstellung die Welle 6 nicht mehr drehbar ist.

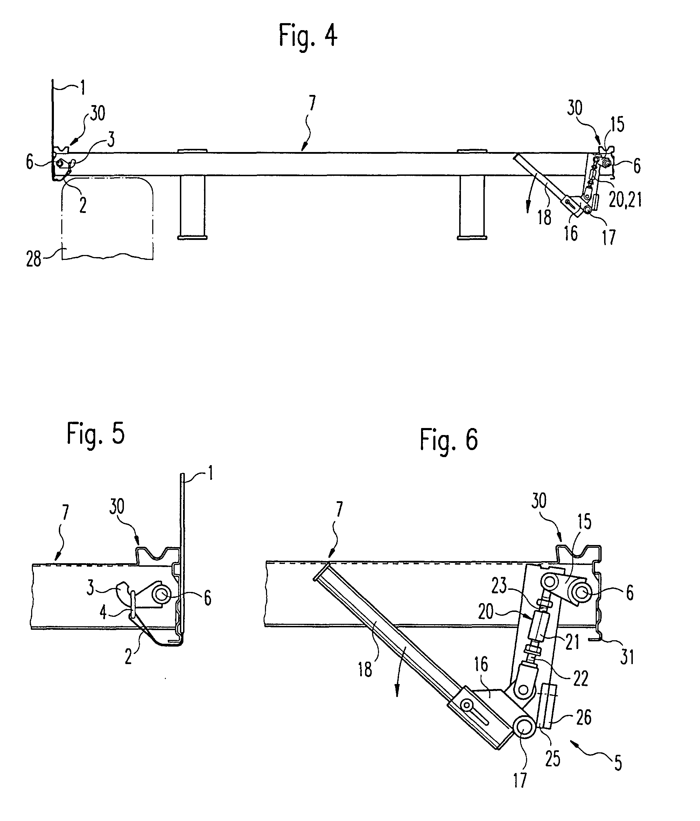

In den Fig. 4, 5 und 6 ist die Schließstellung der erfindungsgemäßen Vorrichtung dargestellt. Wie ersichtlich, wurde der Betätigungshebel 8 im Uhrzeigersinn so lange gedreht, bis eine Übertotpunktlage vorliegt, in welcher über die Koppel 20 und die Schwinge 15 die Spannhaken 3 in Schließstellung liegen, d.h. etwa horizontale Lage einnehmen. Nach Fig. 6 ist damit die Plane 1 mit den Spanngurten 2 und den Ösen 4 sicher festgezurrt. In dieser Position liegen die beiden Schließplatten 25 und 26 nach Fig. 5 aneinander und können durch ein nicht näher dargestelltes Schließelement, beispielsweise einen Zollverschluß oder ein herkömmliches Schloß, miteinander verschlossen werden. Damit ist ein unbefugtes Öffnen über die Spannvorrichtung 5 nicht mehr gegeben.

In Schließstellung liegen die beiden Schließplatten 25 und 26 an der Innenseite des Außenprofils 30 des Rahmens.

Da die mit den Spannhaken 3 versehene Welle 6 im Profilraum des Außenprofils 30 gelagert ist, wird die Welle einwandfrei vor Beschädigungen geschützt. Außerdem geht aus Fig. 1 und 4 hervor, daß sie außerhalb des Bereichs eines schematisch dargestellten Reifens 28 liegt.

Gemäß Fig. 6 sind die mit Ösen 4 versehenen Spanngurte 2 um eine abgerundete Abschlußkante 31 des Außenprofils 30 des Rahmens herumgeführt, so daß eine eventuelle Beschädigung beim Schließvorgang vermieden wird.

Aus den Figuren, insbesondere 2 und 5, geht hervor, daß das Außenprofil 30 als Winkelprofil ausgebildet ist mit zwei profilierten, unterschiedliche Breite aufweisenden Schenkeln 33 und 34. Der schmalere Schenkel 33 liegt vorteilhafterweise horizontal, während der breitere Schenkel 34 vertikal längsseitig des Fahrzeugs verläuft. Innerhalb des von den Schenkeln 33 und 34 umgrenzten Raums des Außenprofils 30 befindet sich die längsverlaufende Welle 6.

Durch die erfindungsgemäße Verriegelungsvorrichtung ergibt sich eine sog. Planenzentralverriegelung, welche nach Einhängen der Ösen in die Spannhaken mit einem einzigen Arbeitsgang ein Festzurren der Plane ermöglicht, wobei in Schließstellung die gesamte Einheit abschließbar ist. Damit ist ein schnelles Öffnen und Schließen der Spanngurte gewährleistet. Da diese Spanngurte um das Außenprofil 30 herumgeführt sind, liegt eine durchgehend gespannte Plane 1 vor, welche eine größere Werbefläche bietet.

## Patentansprüche

1. Verriegelungsvorrichtung für eine Plane (1), insbesondere zum Verschließen und Verspannen einer seitlichen Schiebegardine an einem Fahrzeug, insbesondere Speditionsanhänger, mit an der Plane (1) befestigten Spanngurten (2), Spannhaken (3) und mindestens einer Spannvorrichtung (5) zwischen den Spanngurten (2) und den Spannhaken (3), wobei die Spannhaken (3) an einer gemeinsamen Welle (6) angeordnet sind, welche im Rahmen (7) des Fahrzeugs gelagert und mit der einzigen Spannvorrichtung (5) verbunden ist,
**dadurch gekennzeichnet,**
**daß** die Spannvorrichtung (5) als Doppelschwinge ausgebildet ist, wobei eine erste Schwinge (15) an der Welle (6) befestigt und eine zweite, mit einem Betätigungshebel (18) versehene Schwinge (16) in einer Lagerstelle (17) unterhalb des Rahmens (7) gelagert ist und beide Schwingen (15, 16) durch eine Koppel (20) miteinander verbunden sind.

2. Vorrichtung nach Anspruch 1
**gekennzeichnet durch**
Übertotpunktlage der Doppelschwinge in Schließstellung der Spannvorrichtung (5).

3. Vorrichtung nach Anspruch 1,
**dadurch gekennzeichnet,**
**daß** durch die längenveränderbar ausgebildete Koppel (20) die Spannvorrichtung (5) justierbar ist.

4. Vorrichtung nach Anspruch 3,
**dadurch gekennzeichnet,**
**daß** die Koppel (20) eine Gewindehülse (21) mit zwei gegenläufigen Gewindebolzen (22, 23) aufweist.

5. Vorrichtung nach einem der vorhergehenden Ansprüche,
**dadurch gekennzeichnet,**
**daß** die Spannvorrichtung (5) in Schließstellung abschließbar ist.

6. Vorrichtung nach Anspruch 5,
**dadurch gekennzeichnet,**
**daß** der Betätigungshebel (18) mit einer Schließplatte (25) versehen ist, welche in Schließstellung im Bereich einer anderen, an der Lagerstelle (17) angeordneten Schließplatte (26) liegt und beide Schließplatten (25, 26) durch ein Schließelement miteinander verriegelbar sind.

7. Vorrichtung nach Anspruch 6,
**dadurch gekennzeichnet,**
**daß** in Schließstellung die beiden Schließplatten (25, 26) an der Innenseite eines Außenprofils (30) des Rahmens (7) angeordnet sind.

8. Vorrichtung nach einem oder mehreren der vorhergehenden Ansprüche,
**dadurch gekennzeichnet,**
**daß** die mit den Spannhaken (3) versehene Welle (6) im Profilraum des Außenprofils (30) des Rahmens (7) gelagert ist.

9. Vorrichtung nach Anspruch 8,
**dadurch gekennzeichnet,**
**daß** die Spannhaken in Schließstellung etwa horizontal liegen und die mit Ösen (4) versehenen Spanngurte (2) um eine abgerundete Abschlußkante (31) des Außenprofils (30) des Rahmens (7) herumgeführt sind.

10. Vorrichtung nach einem oder mehreren der vorhergehenden Ansprüche,
**dadurch gekennzeichnet,**
**daß** das Außenprofil (30) als Winkelprofil ausgebildet ist mit zwei profilierten, unterschiedliche Breite aufweisenden Schenkeln (33, 34).

11. Vorrichtung nach Anspruch 10
**dadurch gekennzeichnet,**
**daß** der schmalere Schenkel (33) horizontal und der breitere Schenkel (34) vertikal längsseitig des Fahrzeugs verlaufen.

## Claims

1. Locking device for a tarpaulin (1), in particular for closing and bracing a lateral sliding curtain on a vehicle, in particular a haulage trailer, comprising tension straps (2) fastened to the tarpaulin (1), tension hooks (3) and at least one tensioning device (5) between the tension straps (2) and the tension hooks (3), wherein the tension hooks (3) are disposed on a common shaft (6), which is supported in the frame (7) of the vehicle and connected to the single tensioning device (5),
**characterized in**
**that** the tensioning device (5) takes the form of a double rocker, wherein a first rocker (15) is fastened to the shaft (6), and a second rocker (16) provided with an operating lever (18) is supported at a bearing point (17) below the frame (7) and both rockers (15, 16) are connected to one another by a connecting rod (20).

2. Device according to claim 1,
**characterized by**
top dead centre position of the double rocker in closed position of the tensioning device (5).

3. Device according to claim 1,
**characterized in**
**that** the tensioning device (5) is adjustable by means of the connecting rod (20), which is designed so as to be variable in length.

4. Device according to claim 3,
**characterized in**
**that** the connecting rod (20) comprises a tapped bueh (21) with two oppositely threaded bolts (22, 23).

5. Device according to one of the preceding claims,
**characterized in**
**that** the tensioning device (5) is lockable in closed position.

6. Device according to claim 5,
**characterized in**
**that** the operating lever (18) is provided with a closing plate (25), which in closed position lies in
the region of another closing plate (26) disposed at the bearing point (17), and both closing plates (25, 26) are interlockable by means of a closing element.

7. Device according to claim 6,
**characterized in**
**that** in closed position the two closing plates (25, 26) are disposed at the inside of an outer section (30) of the frame (7).

8. Device according to one or more of the preceding claims,
**characterized in**
**that** the shaft (6) provided with the tension hooks (3) is supported in the section space of the outer section (30) of the frame (7).

9. Device according to claim 8,
**characterized in**
**that** the tension hooks in closed position lie approximately horizontally and the tension straps (2) provided with eyes (4) are conveyed around a rounded-off end edge (31) of the outer section (30) of the frame (7)

10. Device according to one or more of the preceding claims,
**characterized in**
**that** the outer section (30) takes the form of an angle section comprising two shaped limbs (33, 34) of differing width.

11. Device according to claim 10,
**characterized in**
**that** the narrower limb (33) extends horizontally and the wider limb (34) extends vertically in longitudinal direction of the vehicle.

## Revendications

1. Dispositif de verrouillage pour une bâche, notamment pour la fermeture et le serrage d'un rideau coulissant latéral d'un véhicule, notamment d'une remorque de transport, comprenant des sangles de serrage (2) fixées à la bâche (1), des crochets de serrage (3) et au moins un dispositif de serrage (5) entre les sangles de serrage (2) et les crochets de serrage (3), les crochets de serrage (3) étant disposés sur un arbre (6) commun, qui est logé dans le châssis (7) du véhicule et qui est relié au dispositif unique de serrage (5).
**caractérisé en ce que**
le dispositif de serrage (5) est en forme d'une manivelle oscillante double, une première manivelle oscillante (15) étant fixée à l'arbre (6) et une seconde manivelle oscillante (16), qui est munie d'un levier d'actionnement (18), étant logée en un emplacement de logement (17) disposé au-dessous du châssis, et les deux manivelles oscillantes (15, 16) étant reliées l'une à l'autre par une bielle (20).

2. Dispositif selon la revendication 1,
**caractérisé par**
une position au-delà du point mort de la manivelle oscillante double dans la position de fermeture du dispositif de serrage (5).

3. Dispositif selon la revendication 1,
**caractérisé en ce que**
le dispositif de serrage (5) est réglable par la bielle (20), qui est agencé de sorte qu'elle est réglable en longueur.

4. Dispositif selon la revendication 3,
**caractérisé en ce que**
la bielle (20) comprend une douille taraudée (21) comportant deux tiges filetées (22, 23) à filetages de sens opposés.

5. Dispositif selon l'une quelconque des revendications précédentes,
**caractérisé en ce que**
le dispositif de serrage (5) est verrouillable dans sa position de fermeture.

6. Dispositif selon la revendication 5,
**caractérisé en ce que**
le levier d'actionnement (18) est pourvu d'une plaque de verrouillage (25) qui se trouve, en position de fermeture, dans le domaine d'une autre plaque de verrouillage (26) qui est disposée à l'emplacement de logement (17), et les deux plaques de verrouillage (25, 26) étant verrouillables l'une par rapport à l'autre par un élément de verrouillage.

7. Dispositif selon la revendication 6,
**caractérisé en ce que**,
dans la position de fermeture, les deux plaques de verrouillage (25, 26) sont disposées sur le côté intérieur d'un profilé extérieur (30) du châssis (7).

8. Dispositif selon l'une ou plusieurs des revendications précédentes,
**caractérisé en ce que**
l'arbre (6) qui est muni des crochets de serrage (3) est logé dans l'espace de profilé du profilé extérieur (30) du châssis (7).

9. Dispositif selon la revendication 8,
**caractérisé en ce que**
les crochets de serrage sont disposés à peu près horizontalement dans leur position de fermeture, et les sangles de serrage (2), qui sont munies d'oeillets (4), sont guidées autour d'une arête (31) arrondie du profilé extérieur (30) du châssis (7).

10. Dispositif selon l'une ou plusieurs des revendications précédentes,
**caractérisé en ce que**
le profilé extérieur (30) est agencé sous la forme d'une cornière comprenant deux ailes (33, 34) profilées et présentant des largeurs différentes.

11. Dispositif selon la revendication 10,
**caractérisé en ce que**
l'aile la plus mince (33) s'étend horizontalement et l'aile la plus épaisse (34) s'étend verticalement, du côté longitudinal du véhicule.
